# EUROPÄISCHE PATENTSCHRIFT

(11) **EP 3 372 563 B1**
(45) Veröffentlichungstag und Bekanntmachung des Hinweises auf die Patenterteilung: **20.10.2021**
(21) Anmeldenummer: 18160598.1
(22) Anmeldetag: 07.03.2018
(51) Int. Cl.: C03B 11/06, A47G 19/22

(54) **GLASGEFÄSS MIT BEHERBERGTEM METALLELEMENT UND VERFAHREN SEINER HERSTELLUNG**
GLASS VESSEL WITH INTEGRATED METAL ELEMENT AND METHOD FOR PRODUCING THE SAME
CUVE DE VERRE DOTÉE DE L'ÉLÉMENT MÉTALLIQUE INTÉGRÉ ET SON PROCÉDÉ DE FABRICATION

(30) Priorität: 10.03.2017 DE 102017002311
(43) Veröffentlichungstag der Anmeldung: 12.09.2018
(73) Patentinhaber: Maglassx GmbH, 94078 Freyung (DE)
(72) Erfinder: FRITZ, Christoph, 94078 Freyung (DE)
(74) Vertreter: Ridderbusch, Oliver

(56) Entgegenhaltungen:
- US-A1- 2011 114 648
- US-A1- 2013 213 960
- US-A1- 2014 291 335

## Beschreibung

Die vorliegende Erfindung betrifft ein Gefäß aus Glas mit einem beherbergtem Metallelement und ein Verfahren seiner Herstellung. Die vorliegende Erfindung betrifft dabei insbesondere ein Trinkglas aus Glas und insbesondere aus Kristallglas mit einem insbesondere magnetischen Metallelement zur Verwendung in Zusammenwirken mit einem Transportmittel und insbesondere zur Verwendung in einem Fahrzeug jeder Art, und/oder für Personen mit eingeschränkter Motorik und/oder Aufmerksamkeit und/oder Wahrnehmung und/oder als dekoratives Element.

Aus dem deutschen Gebrauchsmuster DE 202014002819 U1 ist ein Magnet- und Metallelement für Gefäße und Einrichtungselemente zum rutschfesten Aufstellen von Gefäßen in einem Fahrzeug bekannt, bei dem vorgeschlagen wird, ein Magnetelement an dem Boden eines Gefäßes aus jeglichem Material und jeglicher Bauart anzuordnen, wobei das Magnetelement in den Boden des Gefäßes eingebettet sein kann.

Zur Bereitstellung eines hochwertigen insbesondere als Trinkglas verwendbaren Gefäßes, das auch höchsten insbesondere optisch ästhetischen und/oder hygienischen Ansprüchen genügt ist es wünschenswert ein derartiges Gefäß transparent und mit leicht zu reinigenden Oberflächeneigenschaften und daher geeigneter Weise aus Glas auszubilden.

Aus der WO 2006/128208 A1 ist ein Glaskörper mit einem im Glas eingeschlossenen Edelstein bekannt, der höchsten optisch ästhetischen Ansprüchen genügen soll, weshalb der Edelstein im wesentlichen mit seiner gesamten Oberfläche am Glaskörper anliegt, wobei der Edelstein bei der Herstellung des Glaskörpers daher vollständig in eine Glasschmelze eingebracht wird.

Aufgrund der verschiedenen Wärmeausdehnungskoeffizienten von Glas und den gängigen als Schmuckelement eingesetzten Metallen und/oder Metallen mit hoher magnetischer Remanenz kommt es beim Abkühlen der Glasschmelze mit einem in die Glasschmelze eingebrachten Metallelement im Bereich des Metallelements zu unerwünschten Spannungen, was zum Auftreten von Rissen bis hin zum vollständigen Bruch des Glases führen kann. Insbesondere bei der Verwendung eines magnetischen Metallelements wird dabei aufgrund der hohen Temperatur der Glasschmelze ausserdem jegliche magnetische Remanenz des Magnetelements zerstört, so dass das Metallelement unerwünscht vollständig entmagnetisiert wird.

Wenn das Metallelement einen Magneten umfasst, was insbesondere für die Verwendung des Gefäßes als rutschfestes Gefäß in Zusammenwirken mit einem Transportmittel und insbesondere für die Verwendung in einem Fahrzeug wünschenswert ist, wird nämlich die magnetische Remanenz des Magneten nicht nur bei einer Temperatur in dem genannten Temperaturbereich einer Glasschmelze von etwa 1400 Grad Celsius entmagnetisiert sondern kann auch bereits in einem niedrigeren Temperaturbereich von z.B. 300 °C massiv beeinträchtigt werden.

Bei dem in der WO 2006/128208 A1 vorgeschlagenen Verfahren kann ausserdem nicht vollständig ausgeschlossen werden, dass bei der Herstellung kleine Lufteinschlüsse bzw. -blasen an der Edelstein/Glas- Grenzfläche auftreten, was für einen hochwertigen optisch ästhetischen Gesamteindruck eines in einem Glas eingebetteten Metallelements ebenfalls nicht wünschenswert ist.

Aus der US 2013/0213960 A1 ist ein Glasgefäß bekannt, das eine in seinem Boden ausgebildete zylindrische Ausnehmung, aufweist, in der ein Magnetelement angeordnet ist, und die von einem Plug (Stopfen) verschlossen ist. Der Stopfen kann ohne Rücksicht auf dessen Eigenschaften und insbesondere auf die Ästhetik des Glases aus einem beliebigen Material aus Kunststoff, Glas, Keramik und Metall ausgebildet sein. Der Stopfen kann auf beliebige Weise in der Ausnehmung befestigt sein, wobei der Stopfen wiederum ohne Beachtung insbesondere eines optisch ästhetischen Erscheinungsbilds und/oder der Dichtheit des Verschlusses mit der Ausnehmung verklebt oder in die Ausnehmung geschraubt sein kann.

Aus der US 2011/0114648 A1 ist ein mit einem Kühlkörper versehenes Glasgefäß bekannt, der auf vielfältige Weise ausgebildet und in das Glasgefäß eingebettet sein kann, und auch ein Metallelement sein kann, und wobei der Kühlkörper auch in einer am Boden des Glasgefäßes ausgebildeten Ausnehmung beherbergt sein kann. Das Metallelement kann dabei in der Ausnehmung in ein Füllmaterial aus einem beliebigen Material aus Glas, Kunststoff oder Keramik eingebettet sein, das geeignet ist, in die Ausnehmung zu fließen.

Aus der WO2012/006428A1 ist bekannt ein Gefäß mit einem Radio-Frequenzidentifikations-Bauelement (RFID Tag) auszustatten, wobei dadurch insbesondere das optische Erscheinungsbild des Gefäßes stark verändert wird.

Es ist daher Aufgabe der vorliegenden Erfindung ein Glasgefäß mit einem eingebetteten Metallelement bereitzustellen, das auch höchsten insbesondere auch optisch ästhetischen Ansprüchen genügt, das eine zufriedenstellend lange Lebensdauer hat, das unempfindlich gegenüber Außeneinflüssen, wie beispielsweise Witterungseinflüssen ist, das sich bedenkenlos auch z.B. in Spülmaschinen reinigen läßt, und das ausserdem geeignet ist, ein magnetisches Metallelement ohne Beeinträchtigung seiner bestimmungsgemäßen Magnetisierung bei seiner Herstellung in der Nähe seines Bodens zu beherbergen, so dass das Gefäß für die Verwendung als rutschfestes Gefäß in Zusammenwirken mit einem Transportmittel geeignet ist und ausserdem in Zusammenwirken mit geeigneten Einrichtungselementen insbesondere auch für die Verwendung in einem Fahrzeug jeder Art geeignet ist und ausserdem für die Verwendung als rutschfestes, sicher stehendes und handhabbares Gefäß für Personen mit eingeschränkter Motorik und/oder Aufmerksamkeit und/oder Wahrnehmung und/oder als dekoratives Element geeignet ist.

Hierbei ist weitere Aufgabe der vorliegenden Erfindung ein für ein vorstehend genanntes erfindungsgemäßes Glasgefäß geeignetes Verfahren zur Herstellung anzugeben, das insbesondere auch für eine kostengünstige industrielle Massenproduktion geeignet ist.

Die Aufgaben der Erfindung werden mit den Merkmalen der unabhängigen Ansprüche gelöst. Vorteilhafte Ausführungen der Erfindung sind ohne Beschränkung in den Merkmalen der Unteransprüche und/oder der nachfolgenden Beschreibung aufgeführt, die von schematischen Zeichnungen begleitet ist.

Die vorliegende Erfindung betrifft insbesondere vorteilhaft ein Glasgefäß, das in seinem Fuß ein magnetisches Metallelement beherbergt, wobei das Gefäß in seinem Fuß eine untere Ausnehmung umfasst, die das Metallelement beherbergt, wobei das Metallelement mittels einem transparenten Klebstoff an dem Boden der Ausnehmung mit dem Fuß verklebt ist und von einem einen verbleibenden Bereich der Ausnehmung auffüllenden und an dem Gefäß und dem Metallelement haftenden Kunststoff eingebettet ist.

Dadurch dass das Metallelement mittels einem transparenten Klebstoff an den Boden der Ausnehmung geklebt ist, ist das Metallelement zum einen an dem Fuß des Gefäßes befestigt und ausserdem der Boden der Ausnehmung mittels dem Klebstoff und dem Metallelement versiegelt. Die Versiegelung des Bodens der Ausnehmung ist dabei besonders vorteilhaft, nachdem dadurch beim Befüllen der Ausnehmung mit Kunststoff verhindert wird, dass flüssiger Kunststoff zwischen das Metallelement und den Boden der Ausnehmung dringt. Dadurch wird verhindert, dass beim Aushärten des Kunststoffs dort Luftblasen entstehen können, so dass ein optisch ästhetisches Erscheinungsbild des Metallelements in dem transparenten Gefäß nicht durch eingeschlossene Luftblasen beeinträchtigt wird.

Durch die weitere Einbettung des Metallelements in Kunststoff wird die Haftung des Metallelements an dem Fuß des Gefäßes weiter verstärkt. Ausserdem ist bei dem vollständig in Kunststoff eingebetteten Metallelement von Vorteil, dass das Metallelement vor äußeren Einflüssen, wie etwa Witterungseinflüssen oder beim Reinigen z.B. auch in einer Spülmaschine durch den Kunststoff geschützt ist.

Zur Bereitstellung eines wünschenswerten insbesondere optisch ästhetischen Erscheinungsbilds, einer geeigneten thermischen Beständigkeit und einer wünschenswerten Beständigkeit gegenüber chemischen Einwirkungen ist dabei das Gefäß vorteilhaft aus einem Kristallglas ausgebildet.

Das Gefäß, die Ausnehmung und das Metallelement sind im wesentlichen axialsymmetrisch zu einer Symmetrieachse ausgebildet, wobei die Ausnehmung in Achsrichtung eine Tiefe hat, die im wesentlichen der Dicke des Metallelements in Achsrichtung entspricht, und wobei das Metallelement außerdem als magnetisches Metallelement ausgebildet ist. Diese Ausführung ist besonders vorteilhaft für die Verwendung des Gefäßes als rutschfestes Trinkgefäß in Zusammenwirken mit einem geeigneten Transportmittel und insbesondere für die Verwendung in Zusammenwirken mit geeigneten Einrichtungselementen als rutschfestes Trinkgefäß in einem Fahrzeug jeder Art und/oder als rutschfestes sicher handhabbares Gefäß für Personen mit eingeschränkter Motorik und/oder Aufmerksamkeit und/oder Wahrnehmung und/oder als dekoratives Element.

Ein hierfür besonders gut geeigneter Magnet ist vorteilhaft als flacher scheibenförmiger Zylinder mit axialer Polung ausgebildet, der insbesondere vorteilhaft ein mit einer Kupfer-Nickel Schutzschicht versehener Neodym Magnet sein kann. Durch die vorstehend beschriebene vorteilhaft symmetrische Geometrie wird dabei ein besonders sicherer Stand und eine besonders stabile und einfache Handhabung des Gefäßes sichergestellt. In diesem Zusammenhang sei gesagt, dass der Begriff "axialsymmetrisch" im Kontext der gesamten vorliegenden Anmeldung sehr weit gefaßt ist und neben axialsymmetrischen Geometrien mit kreisförmigem Querschnitt auch jegliche weitere axialsymmetrische Geometrien wie beispielsweise hexagonale oder trigonale Symmetrien von Gefäß und/oder Ausnehmung und/oder Metallelement einschließt.

Erfindungsgemäß ist die Ausnehmung im wesentlichen als flacher Kegelstumpf mit einer Grundfläche mit einem ersten Durchmesser und mit einer Deckfläche mit einem zweiten Durchmesser ausgebildet, wobei die Grundfläche des Kegelstumpfs die Öffnungsebene der Ausnehmung an der Unterseite des Fußes ist und die Deckfläche des Kegelstumpfs der Boden der Ausnehmung ist, und wobei die Tiefe der Ausnehmung der Höhe des Kegelstumpfs entspricht.

Hierbei sind ausserdem die Höhe des Kegelstumpfs und der Durchmesser seiner Grundfläche und der Durchmesser seiner Deckfläche jeweils derart vorbestimmt ausgewählt, dass ein halber Öffnungswinkel des Kegelstumpfs bzw. der Ausnehmung zwischen 15 und 30 Grad hat und vorzugsweise zwischen 20 und 23 Grad hat, wodurch bei der Herstellung des Gefäßes mit der Ausnehmung ein mit einem der Ausnehmung korrespondierenden Stempel versehenes Werkzeug besonders vorteilhaft aus einer abgekühlten und erstarrten Glasschmelze entfernbar ist. Ausserdem gestattet ein vorstehend beschriebener geeigneter Öffnungswinkel der Ausnehmung eine einfache Positionierung des Metallelements auf dem Boden der Ausnehmung bzw. der Deckfläche des Kegelstumpfs.

Bei einer weiteren vorteilhaften Ausbildung der vorstehenden Ausführung ist das Metallelement im wesentlichen als flacher Zylinder mit einer vorbestimmten Höhe ausgebildet, die etwa der Tiefe der Ausnehmung entspricht und vorzugsweise geringfügig kleiner als die Tiefe der Ausnehmung ist. Dabei entspricht ausserdem der Durchmesser des zylindrischen Metallelements etwa dem Durchmesser des Bodens der Ausnehmung und ist vorzugsweise geringfügig kleiner als der Durchmesser des Bodens der Ausnehmung.

Bei einer weiteren vorteilhaften Ausbildung der vorstehenden Ausführung hat der die Ausnehmung zusammen mit dem Metallelement auffüllende und das Metallelement einschließende Kunststoff eine Mächtigkeit, so dass das untere Niveau des Kunststoffs etwa der Unterseite des Fußes entspricht.

Durch die vorstehend beschriebene geeignete Ausbildung der Ausnehmung mit einer Höhe, die etwas größer ist als die Höhe des Metallelements, wird insbesondere eine vorteilhafte möglichst nahe Positionierung eines magnetischen Metallelements an der Öffnungsebene der Ausnehmung und damit am Bodenniveau des Fußes des Gefäßes ermöglicht, so dass das quadratisch mit der Entfernung abnehmende magnetische Potential des Magnetelements gegenüber dem Niveau eines umlaufenden Rands am Boden des Gefäßes, auf dem das aufgestellte Gefäß ruht, nicht unnötig abgeschwächt wird.

Nach einer weiteren Ausführung der Erfindung ist der die Ausnehmung zusammen mit dem Metallelement vollständig auffüllende und das Metallelement einschließende Kunststoff Polyurethan, mit einem Polyol- und Isocyanatbestandteil, die insbesondere derart ausgewählt sind, dass der Kunststoff transparent ist und in ausgehärtetem Zustand an dem Gefäß und dem Metallelement haftet und dass der Kunststoff weitreichend selbstheilende Eigenschaften hat und ausserdem auch als dünner Kunststofffilm auftragbar ist.

Im Kontext der vorliegenden Erfindung wird hierbei als "selbstheilend" bezeichnet, dass das Kunststoffmaterial der Deckschicht bei Beschädigung vollständig reversibel von selbst ausheilen oder ausgeheilt werden kann, wenn die Molekülstruktur oder das Molekularnetzwerk des Kunststoffmaterials der Deckschicht bei einer Beschädigung oder Verkratzung nicht übermäßig geschädigt oder zerstört wird. Solche Kunststoffmaterialien sind in dem Sinne "weich", dass sie Beschädigungsversuchen ausweichen anstatt - wie bei harten Materialien - verletzt oder verkratzt zu werden. Das Rückstellverhalten ist abhängig vom Glaspunkt des Materials. So kann durch Wärmezufuhr mit externen Temperaturquellen die Materialtemperatur erhöht werden, so dass eine Selbstreparatur des Materials angeregt wird. Des weiteren kann das Material auch durch Polieren der Oberfläche repariert werden. Erfindungsgemäß ist das Metallelement dabei geeigneter Weise von einer Kunststoffschicht mit einer Dicke von 0.5mm bis 2mm und vorzugsweise von 0.8mm bis 1.2mmm bedeckt, so dass sichergestellt ist, dass die selbstheilenden Eigenschaften des ausgewählten Kunststoffs zur Geltung kommen.

Nach einer weiteren Ausführung der Erfindung ist dabei der das Metallelement an den Boden der Ausnehmung klebende Klebstoff ein transparenter Klebstoff auf Polymer-Basis modifizierter Silane (MS-Polymer-Basis), der an Glas und Metall klebt und an dem das vorstehend beschriebene als Kunststoff zur Einbettung des Metallelements ausgewählte Polyurethan ebenfalls haftet, so dass ein Einschluß von Luftblasen in der Nachbarschaft des Klebstoffs mit dem Kunststoff vermieden wird.

Nach einer weiteren Ausführung der Erfindung ist dabei der das Metallelement an den Boden der Ausnehmung klebende Klebstoff mit dem die Ausnehmung auffüllenden und das Metallelement einschließenden Kunststoff identisch.

Das Glasgefäß kann in seiner zentralen Ausnehmung neben dem Metallelement außerdem einen geeigneter Weise im wesentlichen zweidimensional ausgebildeten RFID Tag beherbergen, der zusammen mit dem Metallelement von dem transparenten Kunststoff eingebettet ist, wobei das Metallelement und der RFD Tag geeigneter Weise benachbart angeordnet sind und das vorstehend zu der Dicke bzw. Höhe des Metallelements Gesagte entsprechend für die gemeinsame Dicke bzw. Höhe von Metallelement und RFID Tag gilt. Der RFID Tag und das Metallelement können miteinander verklebt sein. Ein metallisches Antennenelement eines entsprechend ausgebildeten RFID Tags kann auf einem magnetischen Metallelement auch aufgrund dessen magnetischen Eigenschaften haften.

Nach einer Ausführung des erfindungsgemäßen Verfahrens wird in einem ersten Schritt als Glas des Gefäßes ein geeignetes Kristallglas ausgewählt, und die Ausnehmung in dem Gefäß während der Herstellung des Gefäßes mittels Einführen eines Stempels in die Glasschmelze und mittels Entfernung des Stempels nach Abkühlen der Schmelze bereitgestellt. Bei dieser Ausführung ist der Stempel auf einem ebenen Kolbendach des Kolbens eines Werkzeugs als stumpfer Kegel mit einer Grundfläche mit einem Durchmesser, einer Deckfläche mit einem Durchmesser, einer Höhe und einem halben Öffnungswinkel ausgebildet, die jeweils etwa dem vorstehend beschriebenen Durchmesser der Grundfläche, dem Durchmesser der Deckfläche, der Höhe und dem halben Öffnungswinkel von zwischen 15 und 30 Grad und vorzugsweise zwischen 20 und 23 Grad des vorstehend beschriebenen stumpfen Kegels der Ausnehmung entsprechen, wodurch das mit dem Stempel versehene Werkzeug besonders vorteilhaft aus der abgekühlten und erstarrten Glasschmelze entfernbar ist.

Nach dem erfindungsgemäßen Verfahren wird daran anschließend in einem zweiten Schritt das Metallelement mittels transparentem Klebstoff mit dem Boden der Ausnehmung verklebt, wobei insbesondere ein axialsymmetrisches Metallelement mit seiner Achse parallel und etwa deckungsgleich zur Achse eines axialsymmetrischen Gefäßes mit dem Boden der Ausnehmung Klebstoff verklebt wird. Dabei wird die dem Boden der Ausnehmung zugewandte Oberfläche des Metallelements vollständig von einem dünnen Klebstofffilm bedeckt und beim Zusammenfügen von Gefäß und Metallelement der dem Metallelement benachbarte Boden der Ausnehmung ebenfalls vollständig von dem Klebstofffilm bedeckt.

Bei der Vorsehung außerdem eines benachbart mit dem Metallelement angeordneten RFID Tags werden hierbei zunächst das Metallelement und der RFID Tag wie vorstehend beschrieben miteinander verbunden.

Nach dem erfindungsgemäßen Verfahren wird daran anschließend in einem dritten Schritt die Ausnehmung mit Kunststoff aufgefüllt und dabei das Metallelement vollständig von dem Kunststoff bedeckt und daran anschließend der Kunststoff ausgehärtet. Hierbei wird geeigneter Weise als Kunststoff ein Polyurethan, mit einem Polyol- und Isocyanatbestandteil derart ausgewählt, dass der Kunststoff bei einer Arbeitstemperatur von 60°C bis 80°C fließfähig ist, der Kunststoff in ausgehärtetem Zustand an dem Gefäß und dem Metallelement haftet, und der ausgehärtete Kunststoff transparent ist und weitreichend vorstehend beschriebene selbstheilende Eigenschaften hat. Ausserdem wird dabei geeigneter Weise eine vorbestimmte Menge des Kunststoffs ausgewählt, die in ausgehärtetem Zustand die Ausnehmung mit dem Metallelement weitgehend auffüllt und dabei das Metallelement derart einbettet, dass das Metallelement von einer Kunststoffschicht bedeckt wird, die eine Dicke von 0.5 mm bis 2 mm und vorzugsweise von 0.8 bis 1.2 mm hat. Es ist ausserdem klar, dass der Kunststoff erfindungsgemäß derart ausgewählt ist, dass er in ausgehärtetem Zustand weitgehend lösungsmittel- und temperaturbeständig und nicht wasserlöslich ist.

Nachdem der ausgewählte Kunststoff, in den das Metallelement eingebettet wird, bei einer Arbeitstemperatur von 60°C bis 80°C fließfähig ist und in diesem Temperaturbereich in die Ausnehmung und um das Metallelement vergossen wird, bleibt eine magnetische Remanenz eines permanentmagnetischen Metallelements beim Verguß des Kunststoffs vorteilhaft weitestgehend erhalten.

Nach einer Ausführung der Erfindung wird in dem zweiten Schritt als Klebstoff zum versiegelnden Kleben des Metallelements an den Boden der Ausnehmung ein geeigneter transparenter lösemittelfreier Klebstoff auf MS-Polymer-Basis ausgewählt, der geeigneter Weise feuchtigkeitshärtend und überlackierbar ist.

Nach einer Abwandlung des erfindungsgemäßen Verfahrens wird in dem zweiten Schritt als Klebstoff zum versiegelnden Kleben des Metallelements an den Boden der Ausnehmung der vorstehende Polyurethan-Kunststoff ausgewählt, der in dem dritten Schritt die Ausnehmung vollständig auffüllt und das Metallelement vollständig bedeckt.

Nach einer weiteren vorteilhaften Ausführung der Erfindung wird ein erfindungsgemäßes Glasgefäß, das ein Metallelement beherbergt und das insbesondere ein ein Magnetelement umfassendes Metallelement beherbergt, erfindungsgemäß insbesondere als Trinkgefäß in Zusammenwirken mit einem Transportmittel und insbesondere in einem Fahrzeug jeder Art und/oder für Personen mit eingeschränkter Motorik und/oder Aufmerksamkeit und/oder Wahrnehmung und/oder als dekoratives Element verwendet.

Wenn hier vorstehend, wie auch sonst in der Anmeldung von einem Transportmittel gesprochen wird, dann sind dabei im gesamten Kontext der Anmeldung insbesondere Transportmittel zum Transport von Trinkgefäßen in der Gastronomie und/oder bei gesellschaftlichen Veranstaltungen wie etwa geeignet ausgebildete Servierwägen, Serviertabletts, etc. gemeint, die jeweils geeignete mit einem Magneten zusammenwirkende Metallelemente umfassen und/oder mit solchen zusammenwirken.

Wenn hier vorstehend, wie auch sonst in der Anmeldung von einem Fahrzeug oder einem Fahrzeug jeder Art gesprochen wird, dann sind dabei im gesamten Kontext der Anmeldung immer sowohl Landfahrzeuge wie Straßen- oder Schienenfahrzeuge jeder Bauart als auch andere Verkehrsmittel jeder Bauart wie etwa Schiffe, Yachten, Boote, Seilbahnen, Flugzeuge, etc. eingeschlossen, die jeweils geeignet ausgebildete Einrichtungselemente umfassen.

Wenn hier vorstehend, wie auch sonst in der Anmeldung von Personen mit eingeschränkter Motorik und/oder Aufmerksamkeit und/oder Wahrnehmung gesprochen wird, dann sind dabei insbesondere Menschen gemeint, deren sichere bestimmungsgemäße Handhabung von Gefäßen mit Flüssigkeiten wie insbesondere Trinkgläsern zweifelhaft sein kann und für die daher ein rutschfestes Gefäß besonders geeignet ist, wie beispielsweise Kinder oder pflegebedürftige Menschen.

Wenn hier vorstehend, wie auch sonst in der Anmeldung von Verwendung als dekoratives Element gesprochen wird, dann ist damit im gesamten Kontext der Anmeldung insbesondere beispielsweise die Verwendung eines ein magnetisches Metallelement umfassenden Gefäßes in Zusammenwirken mit metallischen Einrichtungselementen, wie beispielsweise Wand- und Deckenelementen, Schränken, Regalen, Leuchten, etc. gemeint. Beispielsweise kann ein oder mehrere Gefäße an metallischen Rahmen von Deckenbeleuchtungen optisch besonders ästhetisch mit den Lichtquellen der Leuchten zusammenwirken.

Zum besseren Verständnis der Erfindung werden die vorstehend genannten Ausführungen nachfolgend zusammen mit auch weiteren vorteilhaften Ausführungen anhand von schematischen begleitenden Zeichnungen detailliert beschrieben.

Hierzu zeigt:
Fig. 1a eine schematische perspektivische Darstellung eines Gefäßes nach einer Ausführung der Erfindung von schräg oben,
Fig. 1b das Gefäß von Fig. 1a von schräg unten,
Fig. 1c eine Draufsicht auf das Gefäß von Fig. 1a und b, und
Fig. 1d einen Schnitt durch das Gefäß von Fig. 1a, b und c entlang der Linie V-V von Fig. 1c;
Fig. 2a eine schematische vergrößerte perspektivische Darstellung des Metallelements des Gefäßes von Fig. 1a bis d, und
Fig. 2b einen Schnitt durch das Metallelement von Fig. 2a entlang der Linie V-V von Fig. 2a;
Fig. 3a eine vergrößerte Darstellung des Gefäßes von Fig. 1 von unten, und
Fig. 3b einen Schnitt durch das Gefäß von Fig. 3a entlang der Linie V-V von Fig. 3a bzw. eine vergrößerte Darstellung des Ausschnitts A von Fig. 1d;
Fig. 4a eine perspektivische Darstellung der Ausnehmung in dem Fuß des Gefäßes von Fig. 3b, und
Fig. 4b eine verkleinerte Seitenansicht eines Werkzeugs zur Herstellung der Ausnehmung von Fig. 4a;
Fig. 5a den Fuß mit der Ausnehmung des Gefäßes von Fig. 3b mit einem in der Ausnehmung angeordneten Metallelement bei der Befüllung mit Kunststoff, und
Fig. 5b eine vergrößerte Darstellung des Ausschnitts A des Fußes von Fig. 5a mit einem in Kunststoff eingebetteten Metallelement;
Fig. 6a eine schematische Darstellung eines erfindungsgemäßen Gefäßes nach einer weiteren Ausführung der Erfindung, und
Fig. 6b das Gefäß von Fig. 1d ausserdem mit einem RFID Tag; und
Fig. 6c ein schematisches Flußdiagramm der wesentlichen Schritte einer Ausführung eines Verfahrens zur Herstellung eines erfindungsgemäßen Gefäßes.

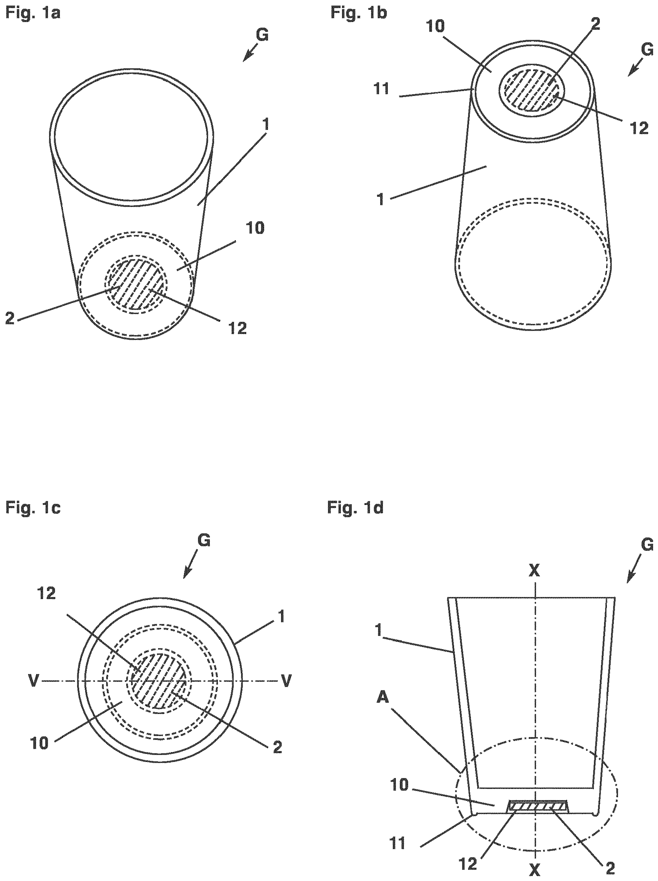

Fig. 1a zeigt eine schematische perspektivische Darstellung eines beispielhaft becherartig ausgebildeten Gefäßes G nach einer Ausführung der Erfindung von schräg oben mit dem Glasgefäß 1, an dessen Fuß 10 eine Ausnehmung 12 ausgebildet ist, wodurch ein Raum zur Beherbergung eines Metallelements 2 bereitgestellt ist, und Fig. 1b zeigt eine entsprechende perspektivische Darstellung des Gefäßes G von Fig. 1a von schräg unten. Fig. 1c zeigt eine schematische Draufsicht auf das Gefäß G von Fig. 1a und b, und Fig. 1d zeigt einen Schnitt durch das Gefäß G von Fig. 1a, b und c entlang der Linie V-V von Fig. 1c. Das beispielhaft becherartig ausgebildete erfindungsgemäße Gefäß G aus Glas ist vorteilhaft axialsymmetrisch zu der Längsachse X ausgebildet und umfasst ausserdem einen am Rand des Fußes 10 ausgebildeten unteren äußeren Rand 11, der nach unten über den Boden des Fußes 10 hinausragt und auf dem das aufgestellte Gefäß G ruht. Das erfindungsgemäße Glasgefäß 1 von Fig. 1 ist ausserdem beispielhaft als sich zu dem Fuß 10 des Gefäßes G hin verjüngender Konus ausgebildet, was insbesondere für ein Gefäß G, das sich gut ineinander stapeln lässt, und das insbesondere ein Trinkgefäß sein kann, vorteilhaft ist.

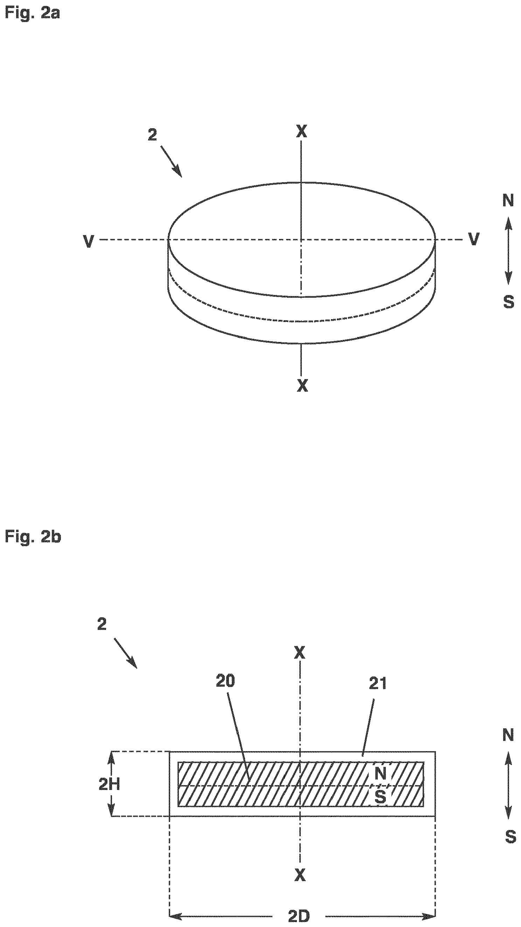

Fig. 2a zeigt eine schematische vergrößerte perspektivische Darstellung des Metallelements 2 des Gefäßes G von Fig. 1a bis d, das geeigneter Weise flach zylindrisch scheibenförmig und wie das Gefäß G ebenfalls axialsymmetrisch zu einer Achse X ausgebildet ist. Nach einer vorteilhaften Ausführung der Erfindung ist das Metallelement 2 ein Magnetelement 20, das geeigneter Weise von einer Schutzschicht 21 bedeckt sein kann. Fig. 2b zeigt hierzu einen Schnitt durch das Metallelement 2 von Fig. 2a entlang der Linie V-V von Fig. 2a, wobei das Magnetelement 20 geeigneter Weise axial zu der Achse X magnetisch gepolt ist, wodurch ein besonders starkes magnetisches Feld in Achsrichtung entsteht, so dass sich das Glasgefäß 1 mit dem Magnetelement 20 für seine Verwendung als rutschfestes Gefäß G in Zusammenwirken mit einem geeigneten Transportmittel und insbesondere für seine Verwendung in einem Fahrzeug und/oder für Personen mit eingeschränkter Motorik und/oder Wahrnehmung und/oder als dekoratives Element besonders eignet. Eine Serie derartiger vorstehend beschriebener mit einem axial gepolten Magnetelement 20 versehener becherartig ausgebildeter Gläser 1 ist dabei vorteilhaft jeweils mit gleich gerichteter Polung in Achsrichtung X der Gläser ausgestattet, so dass sichergestellt ist, dass die Gläser 1 sicher und stabil ineinander stapelbar sind.

Die erfindungsgemäße Vorsehung des axial gepolten Magnetelements 20 gestattet es ausserdem, ein derartiges leeres Gefäß G auch umgekehrt mit seinem Fuß 10 nach oben und seiner Öffnung nach unten beispielsweise in der Gastronomie dauerhaft aufzuhängen/zu lagern, so dass das Innere des Gefäßes G vor Staub und Schmutz weitgehend geschützt ist.

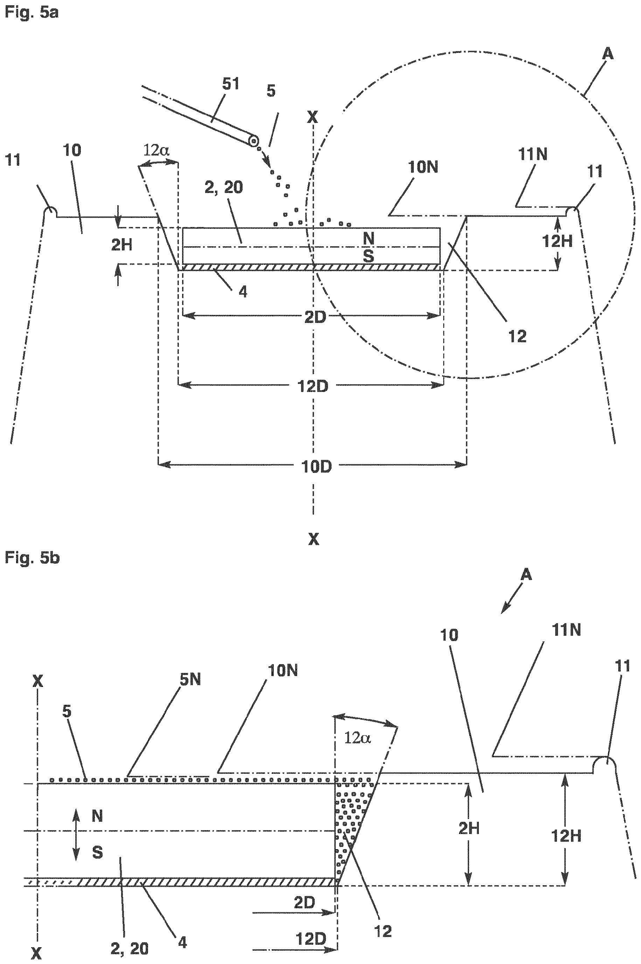

Ein erfindungsgemäßes zylindrisches axialsymmetrisches Metallelement 2 nach Fig. 2a und b, das besonders vorteilhaft ein Magnetelement 20 aufweisen kann, hat dabei eine vorbestimmte Höhe 2H und einen vorbestimmten Durchmesser 2D, was nachfolgend unter Bezugnahme von Fig. 5 detaillierter beschrieben wird.

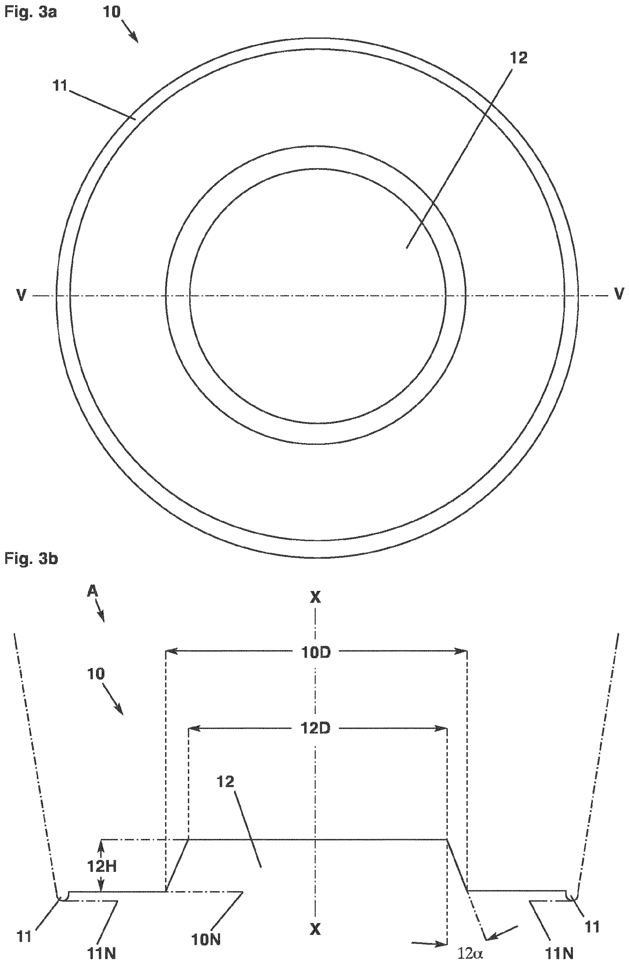

Fig. 3a zeigt eine vergrößerte Darstellung des Fußes 10 des Gefäßes G von Fig. 1 von unten mit der Ausnehmung 12 und dem umlaufenden äußeren Rand 11, und Fig. 3b zeigt einen Schnitt durch das Glasgefäß 1 von Fig. 3a entlang der Linie V-V von Fig. 3a bzw. eine vergrößerte Darstellung des Ausschnitts A von Fig. 1d. Die Ausnehmung 12 von Fig. 3b ist im wesentlichen als flacher Kegelstumpf mit einer Grundfläche mit einem ersten Durchmesser 10D und mit einer Deckfläche mit einem zweiten Durchmesser 12D ausgebildet, wobei die Grundfläche des Kegelstumpfs mit dem Durchmesser 10D die Öffnungsebene der Ausnehmung 12 an der Unterseite 10N des Fußes 10 ist, und die Deckfläche des Kegelstumpfs mit dem Durchmesser 12D der Boden der Ausnehmung 12 ist, und wobei die Tiefe 12H der Ausnehmung 12 der Höhe 12H des Kegelstumpfs entspricht, und wobei die Höhe 12H des Kegelstumpfs und der Durchmesser 10D seiner Grundfläche und der Durchmesser 12D seiner Deckfläche jeweils derart vorbestimmt ausgewählt sind, dass ein halber Öffnungswinkel 12α des Kegelstumpfs bzw. der Ausnehmung 12 zwischen 15 und 30 Grad hat und vorzugsweise zwischen 20 und 23 Grad hat.

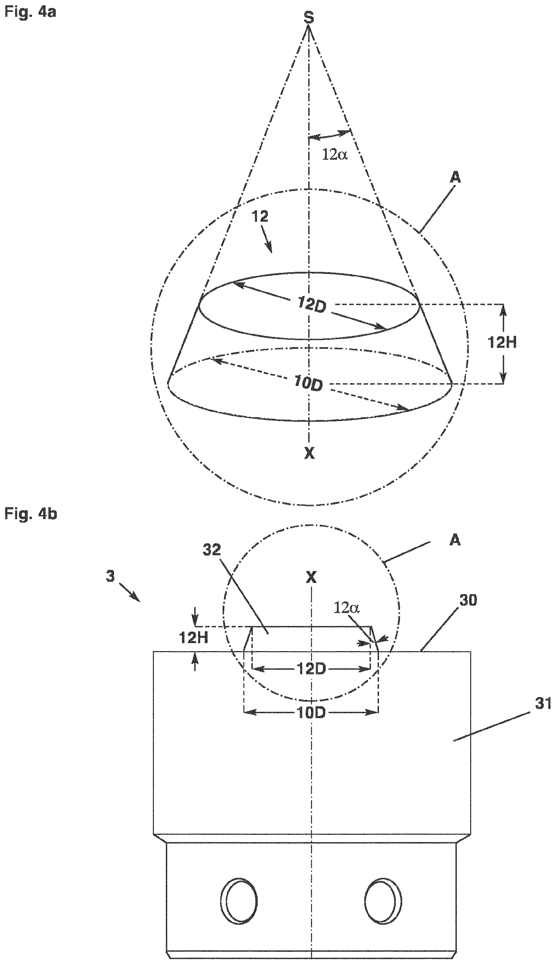

Fig. 4a zeigt hierzu zum besseren Verständnis der vorteilhaften Geometrie der Ausführung der Ausnehmung 12 von Fig. 3b die kegelstumpfartig ausgebildete Ausnehmung 12 perspektivisch zusammen mit dem sie definierenden Kegel mit dem Scheitel S, dem geeigneten halben Öffnungswinkel 12α und der Grundfläche mit dem Durchmesser 10D und der Deckfläche mit dem Durchmesser 12D und der Höhe 12H. Ein besonders geeigneter halber Öffnungswinkel 12α beträgt dabei vorzugsweise zwischen 20 und 23 Grad.

Fig. 4b zeigt eine schematische Seitenansicht eines zur Bereitstellung einer vorstehenden erfindungsgemäßen kegelstumpfartigen Ausnehmung 12 geeigneten Werkzeugs 3 mit einem auf einem ebenen Kolbendach 30 eines Kolbens 31 korrespondierend mit der Ausnehmung 12 von Fig. 3b und 4a ebenfalls kegelstumpfartig ausgebildeten Stempel 32, dessen Abmessungen seiner Grundfläche mit dem Durchmesser 10D, seiner Deckfläche mit dem Durchmesser 12D, seiner Höhe 12H und seines halben Öffnungswinkels 12α jeweils etwa den vorstehend beschriebenen korrespondierenden Abmessungen der Ausnehmung 12 entsprechen. Hierbei ist der mit der Ausnehmung 12 in dem Abschnitt A von Fig. 4a korrespondierende Stempel 32 in dem Abschnitt A von Fig. 4b entsprechend verkleinert dargestellt.

Ein vorstehend beschriebener geeigneter Öffnungswinkel 12α von vorzugsweise zwischen 20 und 23 Grad ist besonders vorteilhaft zur einfachen Entfernung des Stempels 32 aus der abgekühlten und erstarrten Glasschmelze des Gefäßes 1 bei der Ausbildung der Ausnehmung 12. Ausserdem gestattet ein derartiger erfindungsgemäßer Öffnungswinkel von etwa 21.5 Grad eine einfache Positionierung eines Metallelements 2 auch zusammen mit einem RFID Tag 6 auf dem Boden der Ausnehmung 12 bzw. der Deckfläche des Kegelstumpfs mit dem Durchmesser 12D.

Fig. 5a zeigt den Fuß 10 eines erfindungsgemäßen Gefäßes G mit der Ausnehmung 12 von Fig. 3b in der Papierebene um 180 Grad gedreht mit dem in der Ausnehmung 12 positionierten Metallelement 2 während des dritten Schritts S3 des erfindungsgemäßen Verfahrens, in dem die Ausnehmung 12 mittels Verguß über eine Düse 51 mit Kunststoff 5 aufgefüllt wird. Dabei wird das Metallelement 2 erfindungsgemäß von dem Kunststoff 5 bedeckt, was schematisch in dem vergrößerten Abschnitt A von Fig. 5a in Fig. 5b dargestellt ist. Wie vorstehend gesagt entspricht der Fuß 10 von Fig. 5a der entsprechend gedrehten Darstellung von Fig. 3b, weshalb bezüglich der Beschreibung des Fußes 10 und der Ausnehmung 12 auf die Beschreibung von Fig. 3b und Fig. 4a verwiesen wird. Das in der Ausnehmung 12 positionierte Metallelement 2 ist bei der Ausführung von Fig. 5a und b ausserdem beispielhaft und vorteilhaft ein Magnetelement mit axialer Polung in Achsrichtung X des Gefäßes G.

Die Höhe 2H des Metallelements 2 ist geringfügig kleiner als die Höhe 12H der Ausnehmung 12 ausgebildet, so dass das Metallelement vorteilhaft vollständig in die Ausnehmung 12 versenkbar ist, und der Durchmesser 2D des geeigneter Weise zylindrisch ausgebildeten Metallelements 2 entspricht vorteilhaft im wesentlichen dem Durchmesser 12D des Bodens der Ausnehmung 12. Das Metallelement 2 ist mittels eines transparenten Klebstoff 4 auf den Boden der Ausnehmung 12 geklebt, wodurch zum einen das Metallelement 2 an dem Boden befestigt ist und wodurch ausserdem der gesamte Boden der Ausnehmung 12 vollständig mittels dem Klebstoff 4 und dem Metallelement 2 versiegelt ist. Die vollständige Versiegelung des Bodens der Ausnehmung 12 ist besonders vorteilhaft, nachdem dadurch beim Befüllen der Ausnehmung 12 mit dem Kunststoff 5 verhindert wird, dass flüssiger Kunststoff 5 zwischen das Metallelement 2 und den Boden der Ausnehmung 12 dringt. Auf diese Weise wird verhindert, dass beim Aushärten des Kunststoffs 5 dort Luftblasen entstehen können und dass ein optisch ästhetisches Erscheinungsbild des Metallelements 2 in dem transparenten Glasgefäß 1 durch zwischen Metallelement 2 und Boden der Ausnehmung 12 eingeschlossene Luftblasen beeinträchtigt wird. Der Klebstoff 4 kann wie vorstehend beschrieben geeigneter Weise ein transparenter Klebstoff auf MS-Polymer-Basis sein oder mit dem Kunststoff 5 identisch sein, der das Metallelement 2 einschließt.

Durch die geeignete Ausbildung der Ausnehmung 12 mit einer Höhe 12H, die geringfügig größer ist als die Höhe H2 des Metallelements 2, wird insbesondere eine vorteilhafte möglichst nahe Positionierung eines magnetischen Metallelements 20 an der Öffnungsebene der Ausnehmung 12 und damit am Bodenniveau 10N des Fußes 10 des Glasgefäßes 1 ermöglicht, so dass das quadratisch mit der Entfernung abnehmende magnetische Potential des Magnetelements 20 gegenüber dem Niveau 11N des Rands 11, auf dem das aufgestellte Glasgefäß 1 ruht, nicht unnötig abgeschwächt wird.

Erfindungsgemäß ist dabei das in den Kunststoff 5 eingebettete Metallelement 2 vorteilhaft mit einer vorzugsweise etwa 0.8mm bis 1.2mm mächtigen Kunststoffschicht bedeckt, so dass ein unteres Niveau N5 des Kunststoffs 5 etwa mit dem Niveau N10 der Unterseite des Fußes 10 übereinstimmt und keinesfalls über das Niveau 11N des Rands 11 hinausragt, so dass ein sicherer und stabiler Stand des Glasgefäßes 1 nicht beeinträchtigt ist. Die Ausbildung der Kunststoffschicht 5 mit der vorstehend beschriebenen Dicke von etwa 1mm auf dem Metallelement 2 stellt ausserdem eine dauerhafte Einbettung des Metallelements 2 auch unter Ausnutzung der vorteilhaft selbstheilenden Eigenschaften des vorstehend beschriebenen erfindungsgemäß verwendeten Polyurethans sicher.

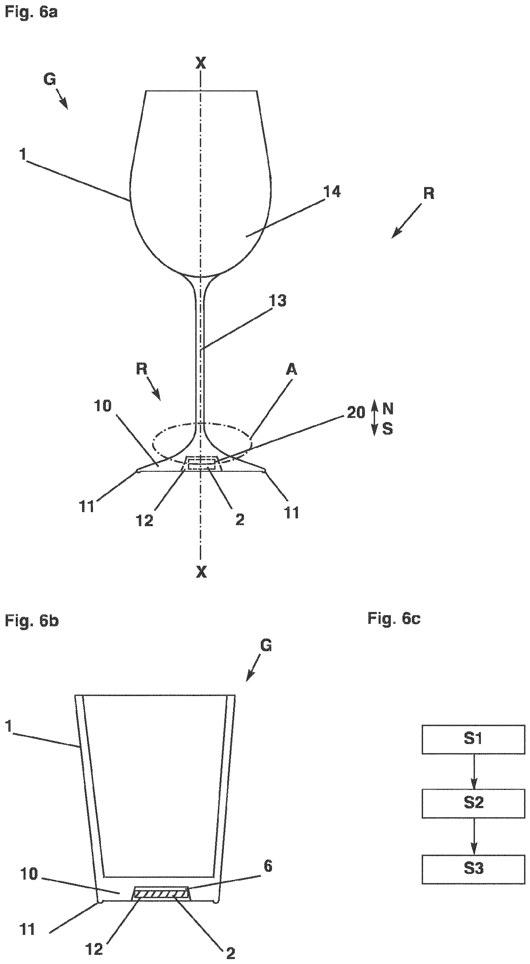

Fig. 6a zeigt eine schematische Seitenansicht eines Gefäßes G nach einer weiteren Ausführung der Erfindung. Das Gefäß G von Fig. 6a ist ein Glasgefäß 1 mit einem Kelch 14, der auf einem Stil 13 mit einem Fuß 10 ruht. Der Fuß 10 hat wie der Fuß 10 der Ausführung von Fig. 1 ebenfalls einen äußeren Rand 11, auf dem das aufgestellte Glasgefäß 1 ruht, und in einer Ausnehmung 12 des Fußes 10 ist ebenfalls ein Metallelement 2 eingebettet. Das Metallelement 2 der Ausführung von Fig. 6a ist wie das Metallelement 2 der Ausführung von Fig. 5 ebenfalls mittels eines transparenten Klebstoffs 4 an den Boden der Ausnehmung 12 geklebt, wodurch insbesondere vorteilhaft sichergestellt ist, dass zwischen Metallelement 2 und Stil 13 des Glasgefäßes 1 keine unerwünschten den optisch ästhetischen Eindruck des eingebetteten Metallelements 2 störende Luftblasen auftreten können. Das ist bei der Ausführung von Fig. 6a besonders wünschenswert, nachdem durch den Übergang des Fußes 10 in den Stil 13 insbesondere im Bereich des Ausschnitts A von Fig. 6a bei Betrachtung etwa aus einer Richtung R ein Lupeneffekt des Gefäßabschnitts A auftritt, was zu einer Vergrößerung des eingebetteten Metallelements 2 führt.

Bei der Ausführung von Fig. 6a ist ein magnetisches Metallelement 20 ebenfalls geeigneter Weise axial zu der Symmetrieachse X des Glasgefäßes 1 gepolt. Ausserdem ist eine Serie gleichartiger Gläser 1 ebenfalls vorteilhaft jeweils mit identisch gepolten Magnetelementen 20 versehen, so dass sichergestellt ist, dass sich zwei oder mehr aufgrund ihres recht dünnen Stils 13 entsprechend fragile Gläser 1 nicht durch unbeabsichtigte gegenseitige Anziehung ihrer Füße 10 unerwünscht gegenseitig anziehen und dabei beschädigen können.

Fig. 6b zeigt eine Abwandlung des Gefäßes 1 von Fig. 1d, bei der das Gefäß 1 zusammen mit dem Metallelement 2 ausserdem ein RFID Tag 6 beherbergt, wobei der RFID Tag 5 beispielhaft benachbart oberhalb des Metallelements 2 angeordnet ist. Die vorstehend beschriebene Höhe bzw. Dicke 2H des Metallelements 2 entspricht bei der Ausführung von Fig. 6c der gemeinsamen Dicke des Metallelements 2 und des RFID Tags 6. Bei dieser Ausführung ist außerdem der RFID Tag 6 und das Metallelement 2 mit dem Boden der Ausnehmung 12 verklebt, wobei ein metallisches Antennenelement eines entsprechenden RFID Tags 6 an einem magnetischen Metallelement 2 haften kann oder der RFID Tag 6 mit dem Metallelement 2 ebenfalls verklebt sein kann.

Auf diese Weise ist wie vorstehend unter Bezugnahme auf Fig. 5 beschrieben der Boden der Ausnehmung 12 ebenfalls vollständig von dem Klebstoff 4 versiegelt und damit vor Lufteinschlüssen mit unerwünschter Blasenbildung geschützt.

Fig. 7 zeigt ein schematisches Flußdiagramm der wesentlichen Schritte einer Ausführung eines bevorzugten Verfahrens zur Herstellung eines erfindungsgemäßen Gefäßes G aus Glas, wobei in einem ersten Schritt S1 die Ausnehmung 12 mittels Einführen eines Stempels 32 in eine Glasschmelze des Gefäßes 1 und mittels Entfernung des Stempels 32 nach Abkühlen der Schmelze bereitgestellt wird. In einem zweiten Schritt S2 wird das Metallelement 2 mittels Klebstoff 4 mit dem Boden der Ausnehmung 12 verklebt, wobei benachbart zu dem Metallelement 2 wie vorstehend unter Bezugnahme auf Fig. 6b beschrieben auch ein RFID Tag 6 vorgesehen sein kann. In einem dritten Schritt S3 wird die Ausnehmung 12 mit dem Kunststoff 5 mittels Verguß aufgefüllt und dabei das Metallelement 2 und der RFID Tag 6 vollständig von dem Kunststoff 5 bedeckt und daran anschließend der Kunststoff 5 ausgehärtet.

Die vorliegende Erfindung wurde vorstehend unter Bezugnahme auf Fig. 1 bis 6 beispielhaft anhand von vorteilhaft axialsymmetrisch ausgebildeten Ausführungen des Gefäßes G mit einem becherartigen und sich zu seinem Fuß 10 hin konusförmig verjüngenden Gefäß 1 der Ausführung von Fig. 1 und der vorstehenden Ausführung von Fig. 6a beschrieben. Hierbei ist jedoch klar, dass ein erfindungsgemäßes ein Metallelement 2 beherbergendes Glasgefäß 1 auch in vielfältig anderen vorstellbaren Geometrien und Formgebungen, mit beispielsweise vier- oder sechseckigem oder auch ovalem Querschnitt und entsprechend beispielsweise hexagonaler oder trigonaler axialer Symmetrie des Gefäßes G und/oder der Ausnehmung 12 und/oder des Metallelements 2, etc. ausgebildet sein kann.

### Bezugszeichenliste

- 1: Glasgefäß
- 10: Fuß
- 10N: erstes Niveau (Fußniveau)
- 11: äußerer Rand
- 11N: zweites Niveau (Randniveau)
- 12: Ausnehmung (Kegelstumpf)
- 12H: Tiefe Ausnehmung (Höhe Kegelstumpf)
- 12D: Durchmesser Deckfläche Kegelstumpf (Boden Ausnehmung)
- 10D: Durchmesser Grundfläche Kegelstumpf (Öffnung Ausnehmung)
- 12α: Halber Öffnungswinkel Kegelstumpf (Ausnehmung)
- 13: Stil
- 14: Kelch

- 2: Metallelement
- 20: Magnetelement
- 21: Beschichtung
- 2H: Höhe Metallelement
- 2D: Durchmesser Metallelement

- 3: Werkzeug
- 30: Kolbendach
- 31: Kolben
- 32: Stempel

- 4: Klebstoff

- 5: Kunststoff
- 51: Düse
- 5N: Füllniveau

- 6: RFID Tag

## Patentansprüche

1. Gefäß (G), das in seinem Fuß (10) ein Metallelement (2) beherbergt, wobei das Gefäß (G) ein Glasgefäß (1) ist, und das Gefäß (G) in dem Fuß (10) eine untere Ausnehmung (12) umfasst, die das Metallelement (2) beherbergt, wobei das Metallelement (2) mittels einem transparenten Klebstoff (4) an dem Boden der Ausnehmung (12) mit dem Fuß (10) derart verklebt ist, dass die dem Boden der Ausnehmung (12) zugewandte Oberfläche des Metallelements (2) vollständig von einem dünnen Klebstofffilm (4) bedeckt ist, und der dem Metallelement (2) benachbarte Boden der Ausnehmung (12) ebenfalls vollständig von dem Klebstofffilm (4) bedeckt ist, so dass der Boden der Ausnehmung (12) vollständig versiegelt ist, und das Metallelement (2) von einem einen verbleibenden Bereich der Ausnehmung (12) auffüllenden und an dem Gefäß (G) und dem Metallelement (2) haftenden transparenten Kunststoff (5) vollständig eingebettet ist, und wobei
das Gefäß (G), die Ausnehmung (12) und das Metallelement (2) axialsymmetrisch zu einer Achse (X) ausgebildet ist,
**dadurch gekennzeichnet, dass**
das Metallelement (2) ein magnetisches Metallelement (2) ist, und
die Ausnehmung (12) als flacher Kegelstumpf mit einer Grundfläche mit einem ersten Durchmesser (10D) und mit einer Deckfläche mit einem zweiten Durchmesser (12D) und mit einer Höhe (12H) ausgebildet ist, wobei
die Grundfläche des Kegelstumpfs die Öffnungsebene der Ausnehmung (12) an der Unterseite (10N) des Fußes (10) ist und die Deckfläche des Kegelstumpfs der Boden der Ausnehmung (12) ist, und wobei
die Tiefe (12H) der Ausnehmung (12) der Höhe (12H) des Kegelstumpfs entspricht, und wobei
die Höhe (12H) des Kegelstumpfs und der Durchmesser (10D) seiner Grundfläche und der Durchmesser (12D) seiner Deckfläche jeweils derart vorbestimmt ausgewählt sind, dass ein halber Öffnungswinkel (12α) des Kegelstumpfs bzw. der Ausnehmung (12) zwischen 15 und 30 Grad hat.

2. Gefäß (G) nach Anspruch 1, wobei
der halbe Öffnungswinkel (12α) zwischen 20 und 23 Grad beträgt.

3. Gefäß (G) nach Anspruch 1 oder 2, wobei das Metallelement (2) als flacher Zylinder mit einer Höhe (2H) und einem Durchmesser (2D) ausgebildet ist, wobei die Höhe (2H) des Metallelements (2) geringfügig kleiner als die Tiefe (12H) der Ausnehmung (12) ist, und wobei der Durchmesser (2D) des Metallelements (2) etwa dem Durchmesser (12D) des Bodens der Ausnehmung (12) geringfügig kleiner als der Durchmesser (12D) des Bodens der Ausnehmung (12) ist, und wobei
der die Ausnehmung (12) zusammen mit dem Metallelement (2) auffüllende und das Metallelement (2) einschließende Kunststoff (5) eine Dicke hat, so dass sein unteres Niveau (5N) etwa der Unterseite (10N) des Fußes (10) entspricht, und das Metallelement (2) dabei von einer Kunststoffschicht (5) bedeckt ist, die eine Dicke von 0.5mm bis 2mm und vorzugsweise von 0.8mm bis 1.2mm hat.

4. Gefäß (G) nach einem der vorstehenden Ansprüche 1 bis 3, wobei
das Glasgefäß (1) aus Kristallglas ist, und das Metallelement (2) ein Neodym Magnet mit einer Kupfer-Nickel Beschichtung ist.

5. Gefäß (G) nach einem der Ansprüche 1 bis 4, wobei der die Ausnehmung (12) zusammen mit dem Metallelement (2) auffüllende und das Metallelement (2) einschließende Kunststoff (5) Polyurethan, mit einem Polyol- und Isocyanatbestandteil ist, die derart ausgewählt sind, dass der Kunststoff (5) in ausgehärtetem Zustand an dem Glasgefäß (1) und dem Metallelement (2) haftet, und
der Kunststoff (5) transparent ist und selbstheilende Eigenschaften hat, und wobei
der das Metallelement (2) an den Boden der Ausnehmung (12) klebende Klebstoff (4) ein transparenter lösemittelfreier Klebstoff (4) auf MS-Polymer-Basis ist oder identisch mit dem Kunststoff (5) ist.

6. Gefäß (G) nach einem der vorstehenden Ansprüche 1 bis 5, wobei in der zentralen Ausnehmung (12) neben dem Metallelement (2) außerdem ein RFID Tag (5) beherbergt ist, der zusammen mit dem Metallelement (2) von dem transparenten Kunststoff (5) eingebettet ist.

7. Verfahren zur Herstellung des Gefäßes (G) nach einem der Ansprüche 1 bis 6, mit den Schritten:
- in einem ersten Schritt (S1) wird die Ausnehmung (12) mittels Einführen eines Stempels (32) in die Glasschmelze des Gefäßes (1) und mittels Entfernung des Stempels (32) nach Abkühlen der Schmelze bereitgestellt;
- in einem zweiten Schritt (S2) wird das Metallelement (2) mittels Klebstoff (4) mit dem Boden der Ausnehmung (12) verklebt; und
- in einem dritten Schritt (S3) wird die Ausnehmung (12) mit dem Kunststoff (5) mittels Verguß aufgefüllt und dabei das Metallelement (2) vollständig von dem Kunststoff (5) bedeckt und daran anschließend der Kunststoff (5) ausgehärtet.

8. Verfahren nach Anspruch 7, wobei in dem ersten Schritt (S1)
als Glasgefäß (1) ein Kristallglas ausgewählt wird, und wobei der Stempel (32) auf einem ebenen Kolbendach (30) des Kolbens (31) eines Werkzeugs (3) als stumpfer Kegel mit einer Grundfläche mit einem Durchmesser, einer Deckfläche mit einem Durchmesser, einer Höhe und einem halben Öffnungswinkel ausgebildet ist, die jeweils etwa dem Durchmesser (10D) der Grundfläche, dem Durchmesser (12D) der Deckfläche, der Höhe (12H) und dem halben Öffnungswinkel (12α) des stumpfen Kegels der Ausnehmung (12) entsprechen.

9. Verfahren nach Anspruch 7 oder 8, wobei in dem zweiten Schritt (S2)
das zylindrische Metallelement (2) mit seiner Achse (X) parallel und etwa deckungsgleich zur Achse (X) des Gefäßes (G) mit dem Boden der Ausnehmung (12) mittels dem Klebstoff (4) verklebt wird, wobei die dem Boden der Ausnehmung (12) zugewandte Oberfläche des Metallelements (2) vollständig von einem dünnen Klebstofffilm (4) bedeckt wird und beim Zusammenfügen von Gefäß (G) und Metallelement (2) der dem Metallelement (2) benachbarte Boden der Ausnehmung (12) ebenfalls vollständig von dem Klebstofffilm (4) bedeckt wird, so dass der Boden der Ausnehmung (12) vollständig versiegelt wird.

10. Verfahren nach einem der Ansprüche 7 bis 9, wobei in dem dritten Schritt (S3)
als der Kunststoff (5) ein Polyurethan, mit einem Polyol- und Isocyanatbestandteil derart ausgewählt wird, dass der Kunststoff (5) bei einer Arbeitstemperatur von 60°C bis 80°C fließfähig ist, und
der Kunststoff (5) in ausgehärtetem Zustand an dem Glasgefäß (1) und dem Metallelement (2) haftet, und
der Kunststoff (5) auch als dünner Kunststofffilm auftragbar ist, und
der ausgehärtete Kunststoff (5) transparent ist und selbstheilende Eigenschaften hat, und wobei ausserdem eine vorbestimmte Menge des Kunststoffs (5) ausgewählt wird, die in ausgehärtetem Zustand die Ausnehmung (12) mit dem Metallelement (2) weitgehend auffüllt und dabei das Metallelement (2) derart einbettet, dass das Metallelement (2) von einer Kunststoffschicht (5) bedeckt wird, die eine Dicke von 0.5 mm bis 2 mm und vorzugsweise von 0.8mm bis 1.2 mm hat.

11. Verfahren nach einem der Ansprüche 7 bis 10, wobei in dem zweiten Schritt (S2)
als der Klebstoff (4) ein transparenter lösemittelfreier Klebstoff (4) auf MS-Polymer-Basis ausgewählt wird oder
als der Klebstoff (4) ein Polyurethan, mit einem Polyol- und
Isocyanatbestandteil derart ausgewählt wird, dass der Klebstoff (4) identisch mit dem Kunststoff (5) ist.

12. Verwendung des Gefäßes (G) nach einem der Ansprüche 1 bis 6 oder des mit einem Verfahren nach einem der Ansprüche 7 bis 11 hergestellten Gefäßes (G), wobei das Metallelement (2) einen Magneten (20) umfasst, als Trinkgefäß in Zusammenwirken mit einem Transportmittel und/oder in einem Fahrzeug jeder Art und/oder für die Handhabung von Personen mit eingeschränkter Motorik und/oder Wahrnehmung und/oder Aufmerksamkeit und/oder als dekoratives Element.

## Claims

1. Vessel (G) which accommodates a metal element (2) in its base (10),wherein the vessel (G) is a glass vessel (1), and the vessel (G) comprises a lower recess (12) in the base (10) which accommodates the metal element (2), wherein
the metal element (2) is bonded to the base (10) by means of a transparent adhesive (4) at the bottom of the recess (12), such that the surface of the metal element (2) facing the bottom of the recess (12) is completely covered by a thin adhesive film (4) and, the bottom of the recess (12) adjacent to the metal element (2) is also completely covered by the adhesive (4), such that the bottom of the recess (12) is completely sealed and, the metal element (2) is completely embedded by a transparent plastic (5) which fills up a remaining area of the recess (12) and which adheres to the vessel (G) and the metal element (2), and wherein
the vessel (G), the recess (12) and the metal element (2) are formed axially symmetrical to an axis (X),
**characterised in that**
the metal element (2) is a magnetic metal element (2),
and
the recess (12) is formed as a flat truncated cone with a base surface with a first diameter (10D) and a top surface with a second diameter (12D) and a height (12H), wherein
the base surface of the truncated cone is the aperture plane of the recess (12) on the lower surface (10N) of the base (10) and the top surface of the truncated cone is the bottom of the recess (12), and wherein
the depth (12H) of the recess (12) corresponds to the height (12H) of the truncated cone, and wherein
the height (12H) of the truncated cone and the diameter (10D) of its base surface and the diameter (12D) of its top surface are each selected in such a predetermined manner that a half aperture angle (12α) of the truncated cone and of the recess (12), respectively is between 15 and 30 degrees.

2. Vessel (G) according to claim 1, wherein
said half aperture angle (12α) is between 20 and 23 degrees.

3. Vessel (G) according to claim 1 or 2, wherein
the metal element (2) is formed as a flat cylinder with a height (2H) and a diameter (2D), and wherein
the height (2H) of the metal element (2) is slightly smaller than the depth (12H) of the recess (12), and wherein
the diameter (2D) of the metal element (2) approximately corresponds to the diameter (12D) of the bottom of the recess (12) and is slightly smaller than the diameter (12D) of the bottom of the recess (12), and wherein
the plastic (5) which fills up the recess (12) together with the metal element (2) and which encloses the metal element (2) has a thickness such that its lower level (5N) approximately corresponds to the lower surface (10N) of the base (10), whereby the metal element (2) is covered by a plastic layer (5) having a thickness of 0.5 mm to 2 mm and preferably of 0.8 mm to 1.2 mm.

4. Vessel (G) according to one of the preceding claims 1 to 3, wherein
the glass vessel (1) is made of crystal glass, and the metal element (2) is a neodymium magnet with a copper-nickel coating.

5. Vessel (G) according to one of claims 1 to 4, wherein the plastic (5) which fills the recess (12) together with the metal element (2) and encloses the metal element (2) is a polyurethane with a polyol and isocyanate component which are selected such that
the plastic (5) in the cured state adheres to the glass vessel (1) and the metal element (2), and that
the plastic (5) is transparent and has self-healing properties, and wherein
the adhesive (4) which adheres the metal element (2) to the bottom of the recess (12) is a transparent solvent-free adhesive (4) based on MS polymer or is identical to the plastic (5).

6. Vessel (G) according to one of the preceding claims 1 to 5, wherein an RFID tag (5) is accommodated in the central recess (12) adjacent to the metal element (2), which is embedded together with the metal element (2) by the transparent plastic (5).

7. Method of producing the vessel (G) according to one of claims 1 to 6, with the steps:
- in a first step (S1), the recess (12) is provided by inserting a punch (32) in glass melt of the vessel (1) and by removing the punch (32) after cooling the melt;
- in a second step (S2) the metal element (2) is bonded to the bottom of the recess (12) by means of adhesive (4); and
- in a third step (S3) the recess (12) is filled up with the plastic (5) by means of casting, whereby the metal element (2) is completely covered by the plastic (5), and subsequently the plastic (5) is cured.

8. Method according to claim 7, wherein in the first step (S1)
as glass vessel (1) a crystal glass is selected, and wherein the punch (32) is formed on a flat piston roof (30) of a piston (31) of a tool (3) as a blunt cone with a base surface with a diameter, a top surface with a diameter, a height and a half aperture angle, wherein each of which approximately corresponding to the diameter (10D) of the base, the diameter (D12) of the top surface, the height (12H) and half the aperture angle (12α) of the truncated cone of the recess (12), respectively.

9. Method according to claim 7 or 8, wherein in the second step (S2)
the cylindrical metal element (2) is bonded to the bottom of the recess (12) by means of the adhesive (4), wherein the axis (X) of the metal element (2) is arranged parallel and approximately congruent to the axis (X) of the vessel (G), and wherein the surface of the metal element (2) which faces the bottom of the recess (12) is completely covered by a thin adhesive film (4) and, when assembling vessel (G) and metal element (2), the bottom of the recess (12) which is in the vicinity of the metal element (2) is completely covered by the adhesive film (4) so that the bottom of the recess (12) is completely sealed.

10. Method according to one of claims 7 to 9, wherein in the third step (S3)
as the plastic (5) a polyurethane, with a polyol and isocyanate component, is selected such that
the plastic (5) is in fluid/flow state at a working temperature of 60°C to 80°C, and
the plastic (5) in the cured state adheres to the glass vessel (1) and the metal element (2), and
the plastic (5) can also be applied as a thin plastic film, and
the cured plastic (5) is transparent and has self-healing properties, and moreover wherein a predetermined amount of the plastic (5) is selected, such that, in the cured state, the recess (12) with the metal element (2) is largely filled whereby the metal element (2) is embedded, such that the metal element (2) is covered by a plastic layer (5) having a thickness of 0.5 mm to 2 mm and preferably of 0.8 mm to 1.2 mm.

11. Method according to one of claims 7 to 10, wherein in the second step (S2)
as the adhesive (4) a transparent solvent-free adhesive (4) based on MS polymer is selected or
as the adhesive (4) a polyurethane, with a polyol and isocyanate component is selected such that the adhesive (4) is identical with the plastic (5).

12. Use of the vessel (G) according to one of claims 1 to 6 or the vessel (G) produced by the method according to one of claims 7 to 11, wherein the metal element (2) comprises a magnet (20), as a drinking vessel in interaction with a means of transport and/or in a vehicle of any kind and/or for the usage by persons with reduced motor skills and/or perception and/or attention and/or as a decorative element.

## Revendications

1. Récipient (G) logeant un élément métallique (2) dans sa base (10), le récipient (G) étant un récipient en verre (1), et
le récipient (G) comprend dans la base (10) un évidement inférieur (12) logeant l'élément métallique (2), tandis que l'élément métallique (2) est collé à la base (10) au fond de l'évidement (12) au moyen d'un adhésif transparent (4) de telle sorte que la surface de l'élément métallique (2) tournée vers le fond de l'évidement (12) est entièrement recouverte d'un film adhésif fin (4), et le fond de l'évidement (12) adjacent à l'élément métallique (2) est également entièrement recouvert par le film adhésif (4), de sorte que le fond de l'évidement (12) est complètement scellé, et l'élément métallique (2) est complètement enrobé par du plastique transparent (5) remplissant une zone restante de l'évidement (12) et adhérant au récipient (G) et à l'élément métallique (2), et tandis que
le récipient (G), l'évidement (12) et l'élément métallique (2) sont formés de manière axialement symétrique par rapport à un axe (X),
**caractérisé en ce que**
l'élément métallique (2) est un élément métallique magnétique (2), et
l'évidement (12) est formé en tant que cône tronqué plat ayant une surface de base avec un premier diamètre (10D) et ayant une surface supérieure avec un second diamètre (12D) et ayant une hauteur (12H), tandis que
la surface de base du cône tronqué est le plan d'ouverture de l'évidement (12) sur la face inférieure (10N) de la base (10), et
la surface supérieure du cône tronqué est le fond de l'évidement (12), et tandis que
la profondeur (12H) de l'évidement (12) correspond à la hauteur (12H) du cône tronqué, et tandis que la hauteur (12H) du cône tronqué et le diamètre (10D) de sa surface de base et le diamètre (12D) de sa surface supérieure sont chacun prédéterminés de sorte qu'un demi-angle d'ouverture (12α) du cône tronqué ou de l'évidement (12) mesure entre 15 et 30 degrés.

2. Récipient (G) selon la revendication 1, tandis que le demi-angle d'ouverture (12α) mesure entre 20 et 23 degrés.

3. Récipient (G) selon la revendication 1 ou 2, tandis que l'élément métallique (2) est formé en tant que cylindre plat avec une hauteur (2H) et un diamètre (2D), tandis que la hauteur (2H) de l'élément métallique (2) est légèrement inférieure à la profondeur (12H) de l'évidement (12), et tandis que
le diamètre (2D) de l'élément métallique (2) correspond au diamètre (12D) du fond de l'évidement ou est légèrement inférieur au diamètre (12D) du fond de l'évidement (12), et tandis que
le plastique(5) remplissant l'évidement (12) avec l'élément métallique (2) et entourant l'élément métallique (2) a une épaisseur telle que son niveau inférieur (5N) correspond approximativement à la face inférieure (10N) de la base (10), et l'élément métallique (2) est ainsi recouvert d'une couche de plastique (5) ayant une épaisseur allant de 0,5 mm à 2 mm et de préférence de 0,8 mm à 1,2 mm.

4. Récipient (G) selon une des revendications 1 à 3 précédentes,
tandis que
le récipient en verre (1) est en verre de cristal, et l'élément métallique (2) est un aimant en néodyme avec un revêtement en cuivre-nickel.

5. Récipient (G) selon une des revendications 1 à 4, tandis que
le plastique (5) remplissant l'évidement (12) conjointement avec l'élément métallique (2) et entourant l'élément métallique (2) est un polyuréthane, ayant un composant polyol et isocyanate, qui sont sélectionnés de telle sorte que le plastique (5) adhère, à l'état durci, au récipient en verre (1) et à l'élément métallique (2), et
le plastique (5) est transparent et possède des propriétés d'auto-réparation, et tandis que
l'adhésif (4) faisant adhérer l'élément métallique (2) au fond de l'évidement (12) est un adhésif (4) transparent sans solvant à base de polymère MS ou est identique au plastique (5) .

6. Récipient (G) selon une des revendications précédentes 1 à 5, tandis que, en plus de l'élément métallique (2), l'évidement central (12) loge également une radio-étiquette RFID (5) qui est enrobée, avec l'élément métallique (2), par le plastique transparent (5).

7. Procédé de fabrication du récipient (G) selon une des revendications 1 à 6, comprenant les étapes suivantes :
- lors d'une première étape (S1), l'évidement (12) est réalisé au moyen de l'insertion d'un tampon (32) dans le verre fondu du récipient (1) et au moyen du retrait du tampon (32) après refroidissement du verre fondu,
- lors d'une deuxième étape (S2), l'élément métallique (2) est collé au fond de l'évidement (12) au moyen d'un adhésif (4), et
- lors d'une troisième étape (S3), l'évidement (12) est rempli de plastique (5) au moyen d'un coulage et, dans le même temps, l'élément métallique (2) est complètement recouvert par le plastique (5) et le plastique (5) est ensuite durci.

8. Procédé selon la revendication 7, tandis que lors d'une première étape (S1)
un verre en cristal est choisi en tant que récipient en verre (1), et tandis que
le tampon (32) est formé sur une tête de piston plat (30) du piston (31) d'un outil (3) en tant que cône émoussé ayant une surface de base avec un diamètre, une surface supérieure avec un diamètre, une hauteur et un demi-angle d'ouverture, qui correspondent, respectivement, approximativement au diamètre (10D) de la surface de base, au diamètre (12D) de la surface supérieure, à la hauteur (12H) et au demi-angle d'ouverture (12α) du cône émoussé de l'évidement (12).

9. Procédé selon la revendication 7 ou 8, tandis que lors de la deuxième étape (S2)
l'élément métallique cylindrique (2) est collé avec son axe (X) parallèlement et de manière approximativement congruente à l'axe (X) du récipient (G) au fond de l'évidement (12) au moyen de l'adhésif (4), tandis que la surface de l'élément métallique (2) tournée vers le fond de l'évidement (12) est complètement couverte par un film adhésif fin (4) et, lorsque le récipient (G) et l'élément métallique (2) sont joints ensemble, le fond de l'évidement (12) adjacent à l'élément métallique (2) est également complètement couvert par le film adhésif (4), de sorte que le fond de l'évidement (12) est complètement scellé.

10. Procédé selon une des revendications 7 à 9, tandis que, lors de la troisième étape (S3),
le plastique (5) est un polyuréthane, avec un composant polyol et isocyanate sélectionné de telle sorte que le plastique (5) est fluide à une température de travail allant de 60°C à 80°C, et
le plastique (5), à l'état durci, adhère au récipient en verre (1) et à l'élément métallique (2), et
le plastique (5) peut également être appliqué sous la forme d'un film plastique fin, et
le plastique (5) durci est transparent et a des propriétés d'auto-réparation, et tandis que, en outre, une quantité prédéterminée de plastique (5) est sélectionnée, laquelle, lorsqu'elle est durcie, remplit en grande partie l'évidement (12) avec l'élément métallique (2), enrobant ainsi l'élément métallique (2) de sorte que l'élément métallique (2) est recouvert par une couche de plastique (5) ayant une épaisseur allant de 0,5 mm à 2 mm et, de préférence, allant de 0,8 mm à 1, 2 mm.

11. Procédé selon une des revendications 7 à 10, tandis que dans le cadre de la deuxième étape (S2)
en tant qu'adhésif (4), un adhésif transparent sans solvant (4) à base de MS-polymère est choisi ou
en tant qu'adhésif (4), un polyuréthane avec un composant polyol et isocyanate est choisi de manière à ce que l'adhésif (4) soit identique au plastique (5).

12. Utilisation du récipient (G) selon une des revendications 1 à 6 ou du récipient (G) fabriqué par un procédé selon une des revendications 7 à 11, tandis que l'élément métallique (2) comprend un aimant (20), en tant que récipient à boire en interaction avec un moyen de transport et/ou dans un véhicule de quelque type que ce soit et/ou pour la prise en charge de personnes à motricité et/ou perception et/ou attention réduites et/ou en cotant qu'élément décoratif.
